# EUROPEAN PATENT SPECIFICATION

(11) **EP 0 517 783 B1**
(45) Date of publication and mention of the grant of the patent: **27.12.1995**
(21) Application number: 91905454.4
(22) Date of filing: 28.02.1991
(51) Int. Cl.: B65D 19/12, B65D 88/52, B62B 3/02

(54) **TRANSPORTATION CARRIER**
TRANSPORTBEHÄLTER
CHARIOT DE TRANSPORT

(30) Priority: 28.02.1990 SE 9000707
(43) Date of publication of application: 16.12.1992
(73) Proprietor: KÄLL, Roland, S-534 00 Varä (SE)
(72) Inventor: KÄLL, Roland, S-534 00 Varä (SE)
(74) Representative: Lindberg, Klas Valter Bo
(86) International application number: SE9100163
(87) International publication number: WO9112999

(56) References cited:
- GB-A- 2 190 895
- SE-B- 340 425
- SE-B- 448 447
- US-A- 2 728 936
- US-A- 3 118 684

## Description

The subject invention concerns a cart for conveying and handling goods and having wheels, castors, runners and similar means for easy transport of goods from the producer to the consumer by way of lorry or truck, the cart being of the kind wherein the opposite pairs of the cart panels are disposed in an essentially parallel relationship and the front is open or consists of an openable front panel whereas the rest of the cart panels are fixed, the bottom panel of the cart being essentially horizontal and including a foldable bottom panel section, which may be raised to an upright position in abutment against one of the fixed panels, whereby two identical carts, after raising of the foldable bottom panel sections of both carts to an upright position, may be moved to a nesting position.

To transport goods load-carrier units that support and protect the goods are often used. The units are generally provided with castors, which is expedient, also when the main transport is by means of e.g. lorries. Transport carts of many various types exist. A common feature is that they may be compacted for storage or when transported in an empty condition.

A common type of cart comprises wedge-shaped side panels and a bottom, and a foldable rear panel, allowing nesting of the carts. A typical example of this kind of cart is the common shopping trolley. The wedge shape is, however, a definite drawback from a space-utilization point of view. This becomes very obvious when one wishes to transport box-like items in this type of cart. The loss of space laterally then becomes considerable.

For the transport of box-shaped packages the most practical configuration of the transport cart used therefore is a box-shaped cart, i.e. one having parallel sides and right-angular corners. In order to allow nesting of empty carts of this type, the side panels of the cart usually are foldable outwards and the shelves removable, as is shown in the Swedish Patent Application 8604421-1, or they are foldable, as is shown in WO86/02610. As a rule, this arrangement allows the empty carts to be closely compacted. However, at the same time it suffers from several serious drawbacks. When the side panels of the cart are folded outwards, for compacting purpuses, the cart as a rule becomes very wobbly, and the operators run the risk of getting squeezed between the stationary and the foldable panels. The foldability as such also has wearing effects on the cart structure. In addition, return packages cannot be accommodated in the nesting carts, which in many cases is a considerable drawback.

One prior-art cart used to transport eggs is arranged to carry return packages also when in a compacted condition. This cart has an open front whereas the rest of the side panels and the bottom are fixed. The cart is stable and does not involve any risks of squeezing. Compacting of two carts is effected by removing the shelves from both carts and placing them in one of the carts together with the return packages from both carts. The second cart is turned upside down and is inserted into the first one. Viewed from above, this arrangement may be described as follows. The fixed side panels of each cart could be regarded as U-shaped forks which are turned with the tines of the forks facing each other and interdigited into a closed unit having a volume only slightly exceeding that of a single cart. In other words, one of the carts carries the shelves, the return packages, and the second cart.

However, this arrangement suffers from several drawbacks. It is very heavy to turn the empty cart upside down and insert it into the other one. The handling exposes the carts to considerable wear and the personnel to injury hazards. The shelves of the various carts become mixed up, which increases the requirement of manufacture precision of the shelves and the carts.

SE-B-340 425 discloses a cart with the feaures of the preamble of claim 1. However, this cart has a U-shaped fixed bottom section which projects from the three fixed side panels. This arrangements prevents efficient nesting of the carts and the total dimension of nesting carts substantially exceeds that of one single cart. When two carts are assembled into nesting relationship gaps form between the individual U-shaped bottom frames. The nesting carts are thus not suitable for transportation of return packages.

The purpose of the subject invention is to provide a cart which is well suited to transport box-shaped goods or box-shaped packages and which is arranged in such a manner that empty carts may be compacted in a simple manner without the side panels having to be folded outwards or the carts having to be turned over. Another purpose is to provide a cart which is arranged in such a manner that return packages may be transported in a compacted pair of carts. In addition, the external dimensions of the nesting pair of carts should only slightly exceed those of a single cart. No separate pieces should be included.

The purposes outlined above are achieved in a transport cart in accordance with the invention presenting the characteristics defined in the appended claims.

More specifically, the transport cart in accordance with the invention is essentially characterised in that the bottom panel of the cart comprises one fixed bottom panel section which extends from one of the fixed side panels and towards the opposite fixed side panel, and an opening beginning where the fixed bottom panel section ends and extending up to the opposite fixed side panel, and in that the foldable bottom panel section at least covers said opening and is preferably in abutment against the rear panel, and in that the fixed bottom panel section of each nested cart penetrates into the opening of the other nested cart, such that the open side of one cart, in the most compacted nesting position, will be positioned closely adjacent the rear panel of the other cart and the fixed bottom panel sections of the cart(s) form a bottom panel which is common to the nesting unit for transportation of return packages or the like.

The cart has been devised with a view to transport eggs which are packaged in box-like packages. Like in many other applications it is in this instance necessary that the return packages can be accommodated inside the compacted carts to be returned to the producer. In this case a fully loaded cart weighs approximately 500 kilos and it is wheeled from the poultry-farm onto the loading platform of a truck for further transportation. The cart is formed with a number of specially devised means to facilitate the transport. It has swivel castors one of which may be locked by means of a spring-loaded catch to provide directional stability. The catch preferably is designed in such a manner that it must be in its active position to allow the bottom panel to be folded downwards into its load-receiving position. In addition, the foldable bottom panel is designed to allow the cart to be lifted by means of a fork-lift truck. Preferably, all shelves are foldable, an arrangement that eliminates all separate parts.

Further characteristics of and advantages in connection with the invention will be described in closer detail in the following with reference to various embodiments, wherein identical numeral references in the various drawing figures refer to corresponding components. In the drawings:
Fig. 1 illustrates in a perspective view a transport cart with the bottom panel in the vertically folded position and four shelves, likewise in the vertically folded position.
Fig. 2 illustrates the cart in a position wherein the bottom panel as well as the shelves are in their horizontally folded positions.
Fig. 3 shows the manner of raising the two uppermost shelves to their vertical positions.
Fig. 4 illustrates the bottom panel of the cart in the horizontal, load-receiving position.
Fig. 5 illustrates the lifting of the rear edge of the bottom panel, corresponding to the first stage of the folding-upwards of the bottom panel.
Fig. 6 illustrates the final stage of raising the bottom panel to the vertical position.
Fig. 7 illustrates the manner in which the return packages of one of the carts are stored on the fixed bottom panel section of the cart.
Fig. 8 is a perspective view of the initial stage of moving two carts into nesting, interdicited position.
Fig. 9 illustrates the same position as seen from above.
Fig. 10 illustrates the two carts in a perspective view in their fully nesting position, and
Fig. 11 illustrates the same situation as seen from above.

Since the cart has two identical side panels comprising a number of identical components, the panels and the components pertaining thereto will be identified by means of the reference number together with the suffix a and b, respectively, for instance side panels 3a and 3b. When a component changes direction, it is referred to with the addition of the suffix ' and so on, such as for instance the downwardly depending front edge 12'.

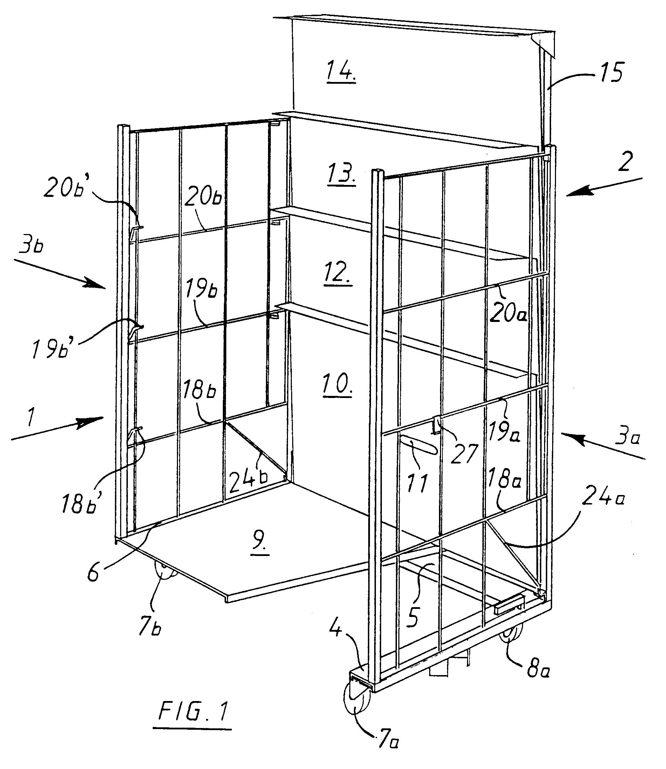

In Fig. 1, reference numeral 1 designates an open front. Opposite thereto is a fixed and closed rear panel 2 and at the sides two fixed and closed side panels 3a and 3b. The closed panels are constructed from vertical and horizontal round bars in the conventional manner. The checkerwork spacing is sufficiently narrow to prevent packages from falling out so that the panel is closed, functionally speaking. The fixed panels are securely attached to a U-shaped load-carrying unit having bottom reinforcement profile members 4, 5, and 6. Four castors 7a, 7b, 8a, 8b are secured to said profile members.

The cart has one stationary, that is, not foldable bottom panel section 9 and one foldable bottom panel section 10. The latter is formed with a recess 11 for easy folding of the panel setion. In accordance with the embodiment illustrated it covers the entire bottom panel but it may be smaller, provided that it is big enough to receive support from the stationary bottom panel section 9 and from the reinforcement profile members 4 and 5.

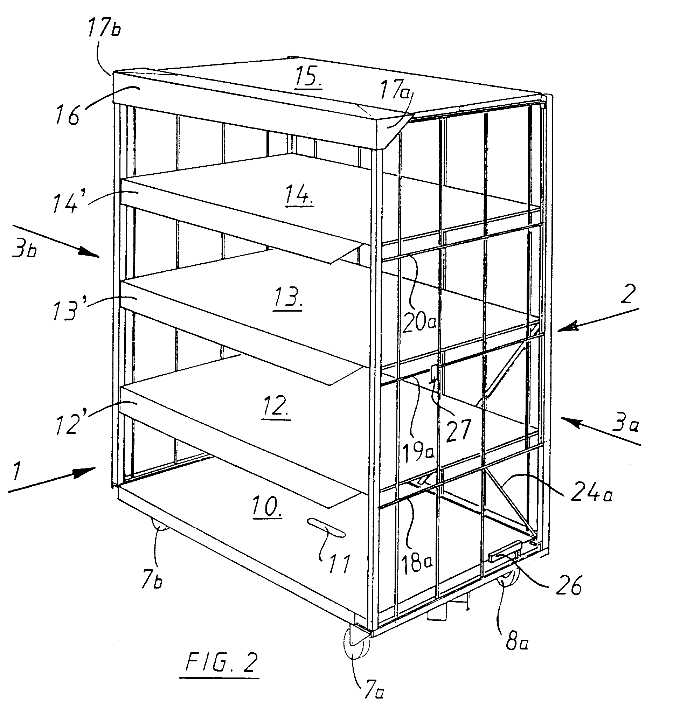

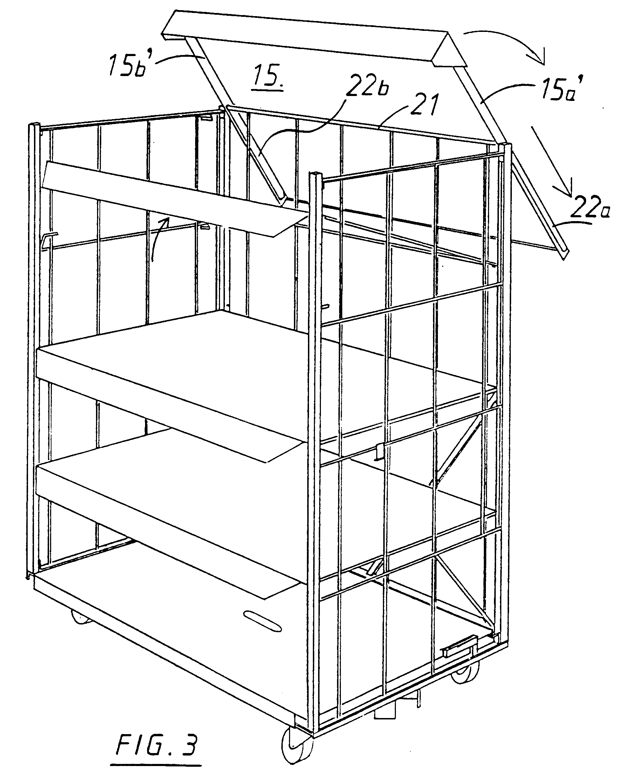

Above the bottom panel there are, in succession, three identical shelves 12, 13, and 14. These shelves are formed with a front edge 12', 13', and 14' which is bent downwards, i.e. with a vertically downwardly depending front edge, as is most clearly apparent from Figs. 2 and 3. When the shelf is in its horizontal position, the edge prevents items supported on the shelf below, alternatively on the bottom panel, from falling out of the cart. This arrangement of the shelf edge to retain the goods in position is a more practical solution than one involving a vertically upright shelf edge inas much as an edge, thus designed would interfere with the loading and unloading operatings. In addition, the downwardly depending edge reinforces the shelf.

At the top, there is a specially designed top shelf 15. The top shelf is equipped at its front edge with a fixed L-shaped profile member 16 having closed end plates 17a and 17b. When this shelf is in its horizontal position, the front edge and the side portions of the profile member side portions will enclose the upper front corners of the cart, keeping them together and providing protection. At the same time, the entire cart is stabilized and the grip of the edge about the corners serves to lock the shelf in position, whereby it becomes impossible to push the shelf backwards without first raising it.

The shelves 12, 13, 14 are hingedly connected to the rear panel in such a manner that they may be folded into an upright position in abutment against the panel. However, they are also easily removable, without the use of tools, for e.g. repair or cleaning. Pivot pins attached to the associated shelf at the rearmost part thereof at either side adjacent the side panels serve as the shelf articulation points. The pivot pins slide in longitudinal grooves extending alongside each side panel, from the lowermost shelf 12 upwards, past the shelf 14. Inside the grooves abutment means are provided for the pivot pins of each shelf to limit movement downwards but not upwards. The horizontal round bars 18a, 18b, 19a, 19b, 20a, 20b of the cart panels serve to support the shelves. Over most of their extension, these bars extend externally of the cart panels but at their ends they project into the interior of the cart. At their rear ends they serve as the shelf pivot-pin abutment means and at their front as an abutment to the shelf itself. The horizontal end parts 18a', 18b', 19a', 19b', 20a', 20b' provide precisely this abutment function. Owing to this arrangement, a shelf may be lifted from its horizontal position adjacent one side panel until the pivot pin associated therewith is lifted clear of the groove. Thereafter, the shelf may be pulled towards the side panel in question until the pivot pin inside the groove at the opposite side is likewise freed and the shelf may be removed.

The hinging arrangements concerning the top shelf differs somewhat from that of the rest of the shelves, as is most clearly illustrated in Fig. 3. The uppermost round bar 21 of the rear panel serves as a hinge on which this shelf is articulated. The lateral edges 15a' and 15b' of the shelf adjacent the cart side panels are bent downwards and extend internally of the side panels and along approximately half their lengthwise extension they are formed with grooves 22a and 22b in which the round bar 21 is received. From its horizontal, load-receiving position the shelf must first be lifted somewhat upwards so as to disengage it from its gripping position about the front corners of the cart. When thus disengaged, the shelf may be pushed backwards as far as allowed by the grooves formed in the shelf and thereafter be folded upwards, into a vertical position in abutment against the external face of the rear panel of the cart. A principally possible alternative would be to arrange for the top shelf to be accommodated in the interior of the cart when in its upright position, but this solution would complicate the shelf pivoting movements while at the same time the shelf could easily interfere with the shelf below. As appears from Fig. 1, the top shelf 15 projects only slightly above the shelf 14 below when in its upper, vertical position. When in their upright position, the two shelves 14 and 15 extend respectively externally and internally of the rear panel.

The foldable bottom panel section 10 has a reinforced, downwards bent front edge 23 of a special design. It comprises a U-shaped profile member which, when pushed backwards, towards the rear panel, grips the reinforcement profile members 4 and 6 at each side panel. In this position, the reinforced front edge 23, together with the lateral reinforcement profile members 4 and 6, form a frame extending around the perimeter of the cart bottom and of sufficient strength to allow a fully loaded cart to be lifted by means of a fork lift truck.

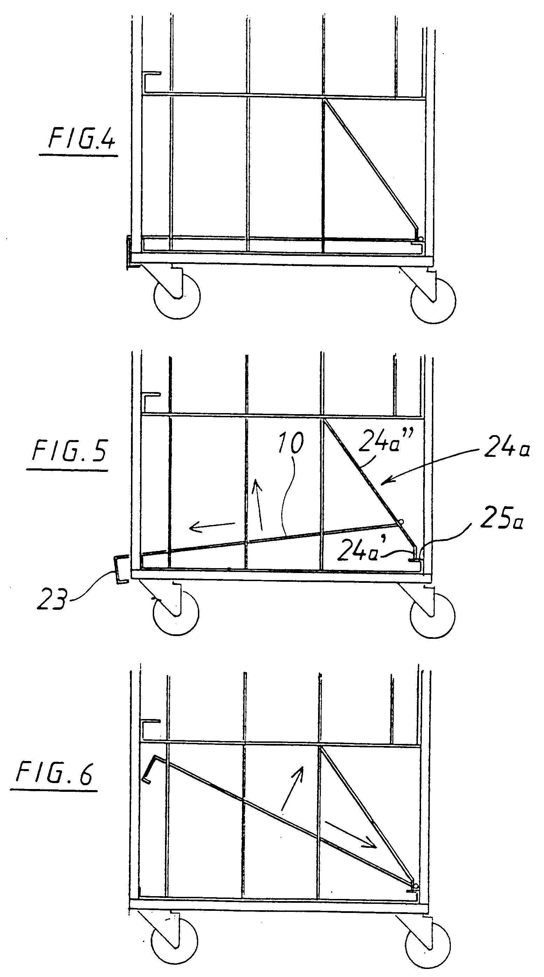

To allow movement of the bottom panel towards or away from the rear panel in a simple manner and locking thereof in the rear position, the bottom panel hinging means are of a special design. The articulation points of the bottom panel which may be formed by e.g. pivot pins, are securely attached to the bottom panel at either side thereof and are directed towards the side panels. The side panels are formed with partly free attachments for the pivot pins. As appears from Figs. 4 to 6 they are designed in such a manner that rods 24a and 24b attached to their respective one of the side panels and movable in the plane of the side panels, limit the movement of the bottom panel towards the free or open cart side. When the bottom panel assumes its horizontal load-receiving position illustrated in Fig. 4, the pivot pins are supported by horizontal supports 25a and 25b. From there, each rod extends upwards in the form of a vertical section 24a', 24b' with the result that the bottom panel will be retained in its horizontal position in such a manner that it cannot be pulled towards the open side of the cart. On the other hand, the rear panel end may be lifted with the aid of the recess 11 formed in the bottom panel. Above the vertical section the rod is bent, forming a diagonal rod section 24a'' , 24b'', which extends upwards and forwards towards the open cart side. Owing to this arrangement it becomes possible, as soon as the pivot pins move upwards along the diagonal rod sections, to begin to pull the bottom panel forwards, which happens automatically when the user lifts the panel upwards and outwards, see Fig. 5. As a result, the reinforced front edge 23 of the panel will be disengaged from the reinforcement profile members 4 and 6, thus allowing the bottom panel to be swung upwards, as illustrated in Fig. 6.

As mentioned previously, the castors are swivel castors. The castor 8a may be locked against movement by means of a catch, thus locking the castor in the longitudinal direction of the cart, i. e. in the direction from side panel 3a towards side panel 3b. A handle 26 is provided to operate the catch, which is spring-loaded in such a manner that by setting the handle in the position illustrated for the purpose of locking the castor, the spring-loaded catch affects the associated castor in such a manner that the latter will be locked as soon as it assumes a position wherein it extends in the longitudinal direction of the cart. This will happen as soon as the operator begins to push the cart in the lengthwise direction thereof. With the handle in the unlocked position, the bottom panel cannot be folded completely into its fully load-receiving position. To affect this, a handle-actuated member assumes such a position in said unlocked position, that it prevents the pivot pin associated with the bottom panel from reaching its horizontal support 25a. This is an important feature since it ensures that the operator does not forget the catch during loading. The truck driver thus can rely on the fully-loaded carts having increased directional stability.

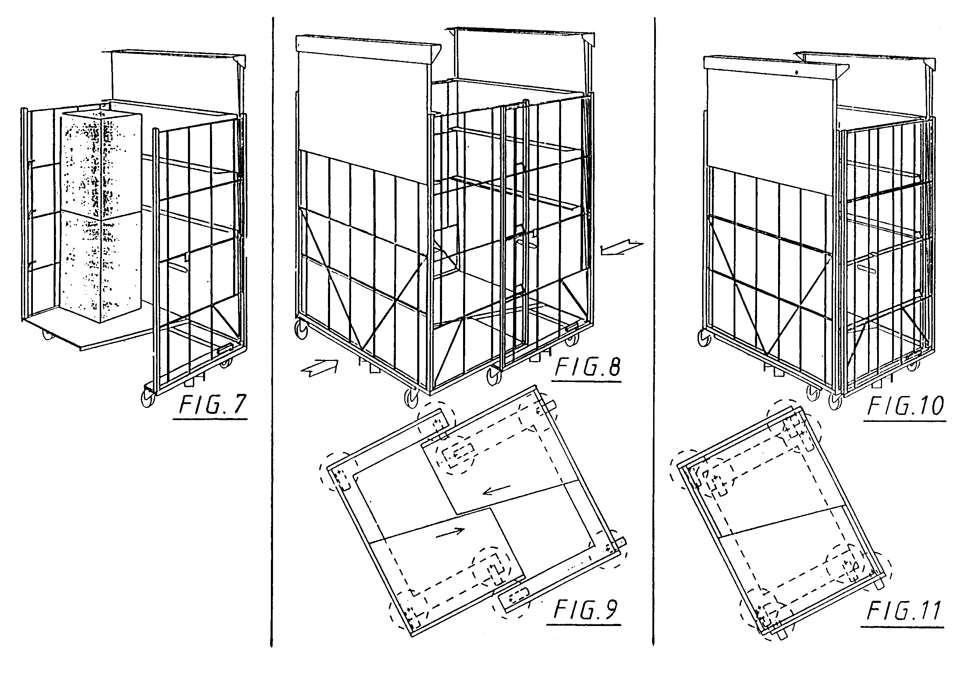

When two empty carts have been moved into a nesting position, they are retained in that position by means of a simple locking mechanism 27, see Figs. 1 and 10. The locking mechanism is attached to the horizontal round bar 19a and engages the corresponding round bar 19b of the other cart.

As appears from the claims, the invention is considerably broader than appears from the embodiment described in the aforegoing. For instance, the various shelves may be arranged so as to be folded upright into abutment against different fixed panels. In addition, the fixed bottom panel section may be eliminated and the entire bottom panel of one cart be folded into its upright position and the other cart be moved into nesting position therein sidewise, i.e. with one of its sides inserted in the U-shaped configuration formed by the first cart. This arrangement requires that a predetermined relationship exists between the length and the width of the cart and it precludes the use of completely square carts.

## Claims

1. A cart for transport of goods and having wheels, castors, runners and similar means for easy transport from e.g. a producer to a consumer by way of lorry or truck, said cart being of the kind wherein the opposite pairs of the cart panels are disposed in an essentially parallel relationship and the front (1) is open or consists of an openable panel whereas the rest of the cart panels are fixed, the bottom panel of the cart being essentially horizontal and including a foldable bottom panel section (10), which may be raised to an upright position in abutment against one of the fixed panels, whereby two identical carts, after raising of the foldable bottom panel sections (10) of both carts to an upright position, may be moved to a nesting position, **characterized** in that the bottom panel of the cart comprises one fixed bottom panel section (9) which extends from one (3b) of the fixed side panels and towards the opposite fixed side panel (3a), and an opening beginning where the fixed bottom panel section (9) ends and extending up to the opposite fixed side panel (3a), and in that the foldable bottom panel section (10) at least covers said opening and is preferably in abutment against the rear panel (2), and in that the fixed bottom panel section (9) of each nested cart penetrates into the opening of the other nested cart, such that the open side (1) of one cart, in the most compacted nesting position, will be positioned closely adjacent the rear panel (2) of the other cart and the fixed bottom panel sections (9, 9) of the cart(s) form a bottom panel which is common to the nesting unit for transportation of return packages or the like.

2. A cart as claimed in claim 1, **characterized** in that the fixed bottom panel section (9) is wedge-shaped.

3. A cart as claimed in any one of the preceding claims, **characterized** in that the foldable bottom panel section (10) is arranged to be raised to an upright position against the rear panel (2), that it has attachment means (24a, 24b) which in addition to allowing raising movements of said bottom panel section also allow the bottom panel to be moved in a direction towards or away from the rear panel, and in that the bottom panel section is formed with a reinforced front edge (23) of such a configuration that it may engage parts of the cart connected with the associated fixed side panel, whereby when the front edge is in its lowermost and extreme pull-out position and the bottom panel is moved towards the rear panel, the front edge will engage said cart parts, whereby folding of the bottom panel upwards is positively prevented, when the cart is lifted by auxiliary means, such as by a fork lift truck, which engage the cart both below said front edge and below the edge of one of the fixed panels, preferably the edge (5) of the rear panel.

4. A cart as claimed in claim 3, **characterized** in that each articulation point is securely attached to its associated foldable bottom panel section and in that its attachment to the associated fixed side panel is designed in such a manner that from the lower horizontal position of the bottom panel section the associated articulation point is initially moved upwards essentially vertically and then upwards and away from the rear panel.

5. A cart as claimed in anyone of the preceding claims, **characterized** in that an essentially horizontal shelf (12) is provided above the bottom panel of the cart, said shelf being arranged to be raised into an upright position against one of the fixed panels.

6. A cart as claimed in claim 5, **characterized** in that said shelf (12) has a front edge in the shape of a vertically downwards directed member (12'), whereby during lowering movements of said shelf said edge prevents goods stored on the shelf below from falling out while at the same time the shelf is reinforced.

7. A cart as claimed in claim 5 or 6, **characterized** in that said shelf (12) has two articulation points, formed e.g. by pivot pins, each one of which is securely attached to the shelf, and in that corresponding attachments in the respective one of the fixed panels are in the form of grooves having abutment means to limit downwards movements of the articulation point but no abutment means for limitation of upwards movements, whereby the shelf may be removed by lifting one side thereof to move the associated articulation point upwards and free of the groove, thus allowing the articulation point at the opposite side to be likewise lifted off its groove.

8. A cart as claimed in any one of the preceding claims, **characterized** in that at least one essentially horizontal shelf (15) positioned adjacent or close to the upper face of the cart, is hingedly connected to an adjacent one of the fixed panels so as to be raised to a vertically upright position, the articulation points of said shelf running in grooves (22a, 22b) along the sides (15a', 15b') of said shelf, thus allowing the shelf to be pushed relatively to its articulation points and to be moved downwards alongside said fixed panel into a vertically upright position in abutment against said panel.

9. A cart as claimed in claim 8, **characterized** in that a shelf (15) positioned at the upper face of the cart has a vertically downwards prolonged front edge (16) including an adjoining lateral portion (17a, 17b) on either side designed in such a manner that in the lower, horizontal position of the shelf the upper corner of the cart, at the open side, will be enclosed by said shelf in such a manner that in this position the shelf cannot be moved towards the rear panel (12) while at the same time said upper corners are kept together and are stabilized.

10. A cart as claimed in claims 5-9, **characterized** in that all shelves are arranged to be raised against the same fixed panel, preferably the rear panel (2).

11. A cart as claimed in any one of the preceding claims, **characterized** in that at least one of the castors (8a) may be locked against turning movement.

12. A cart as claimed in claim 11, **characterized** in that the castor locking control means (26) is designed in such a manner that it is forced to be in its locked position in order that the foldable bottom panel (10) may be lowered to its horizontal, load-receiving position, and preferably said control means is arranged to be shifted to the locking position by the foldable bottom panel when the latter is moved to its horizontal position.

## Patentansprüche

1. Karren zum Transport von Gütern mit Rädern, Laufrollen, Laufschienen oder ähnlichen Mitteln zum leichten Transport von zum Beispiel einem Hersteller zu einem Verbraucher mittels eines Lastwagens oder Lieferwagens, wobei der Karren jener Art ist, bei der die einander gegenüberliegender Paare von Karrenplatten in im wesentlichen paralleler Beziehung angeordnet sind und die Vorderseite (1) offen ist oder aus einer Platte besteht, die geöffnet werden kann, während die restlichen Karrenplatten feststehend sind, wobei die Bodenplatte des Karrens im wesentlichen horizontal ist und einen klappbaren Bodenplattenabschnitt (10) aufweist, der in eine aufrechte Position, an eine der feststehenden Platten anstoßend, angehoben werden kann, wobei zwei identische Karren, nach dem Anheben der klappbaren Bodenplattenabschnitte (10) beider Karren in eine aufrechte Position, in eine ineinandergeschobene Position bewegt werden können, dadurch gekennzeichnet, daß die Bodenplatte des Karrens einen feststehenden Bodenplattenabschnitt (9), der sich von einer (3b) der feststehenden Seitenplatten zur gegenüberliegenden, feststehenden Seitenplatte (3a) erstreckt, und eine Öffnung enthält, die dort beginnt, wo der feststehende Bodenplattenabschnitt (9) endet und sich bis zur gegenüberliegenden feststehenden Seitenplatte (3a) erstreckt, und daß der klappbare Bodenplattenabschnitt (10) zumindest die Öffnung bedeckt und vorzugsweise an die hintere Platte (2) anstößt, und daß der feststehende Bodenplattenabschnitt (9) jedes ineinandergeschobenen Karrens in die Öffnung des anderen ineinandergeschobenen Karrens derart eindringt, daß die offene Seite (1) eines Karrens in der kompaktesten ineinandergeschobenen Position dicht neben der hinteren Platte (2) des anderen Karrens positioniert wird und die feststehenden Bodenplatterabschnitte (9, 9) des Karrens bzw. der Karren eine Bodenplatte bilden, die der ineinandergeschobenen Einheit zum Transport von Rücklieferpackungen oder dergleichen gemein ist.

2. Karren nach Anspruch 1, dadurch gekennzeichnet, daß der feststehende Bodenplattenabschnitt (9) keilförmig ist.

3. Karren nach einem der vorhergehenden Ansprüche, dadurch gekennzeichnet, daß der klappbare Bodenplattenabschnitt (10) so angeordnet ist, daß er in eine aufrechte Position an die hintere Platte (2) angehoben werden, kann, daß er Befestigungsmittel (24a, 24b) aufweist, die neben dem Gestatten von Anhebebewegungen dieses Bodenplattenabschnitts auch das Bewegen der Bodenplatte zur hinteren Platte hin oder von ihr weg gestatten, und daß der Bodenplattenabschnitt mit einer verstärken Vorderkante (23) ausgebildet ist, die so konfiguriert ist, daß sie mit der zugehörigen, feststehenden Seitenplatte verbundene Teile des Karrens in Eingriff nehmen kann, wobei die Vorderkante diese Karrenteile in Eingriff nimmt, wenn sie sich in ihrer untersten und ganz ausgezogenen Position befindet und die Bodenplatte zu hinteren Platte hin bewegt ist, Wobei ein Nachobenklappen der Bodenplatte zwangsläufig verhindert wird, falls der Karren durch Hilfsmittel, wie zum Beispiel durch einen Gabelstapler, angehoben wird, die den Karren sowohl unter dieser Vorderkante als auch unter der Kante einer der feststehenden Platten, vorzugsweise der Kante (5) der hinteren Platte, in Eingriff nehmen.

4. Karren nach Anspruch 3, dadurch gekennzeichnet, daß jeder Gelenkpunkt fest an seinem zugehörigen, klappbaren Bodenplattenabschnitt angebracht ist und daß seine Befestigung an der zugehörigen, feststehenden Seitenplatte derart ausgeführt ist, daß der zugehörige Gelenkpunkt von der unteren, horizontalen Position des Bodenplattenabschnitts anfangs im wesentlichen senkrecht nach oben und dann nach oben und von der hinteren Platte weg bewegt wird.

5. Karren nach einem der vorhergehenden Ansprüche, dadurch gekennzeichnet, daß ein im wesentlichen horizontales Regal (12) über der Bodenplatte des Karrens vorgesehen ist, wobei das Regal so angeordnet ist, daß es in eine aufrechte Position an eine der feststehenden Platten angehoben werden kann.

6. Karren nach Anspruch 5, dadurch gekennzeichnet, daß das Regal (12) eine Vorderkante in Form eines vertikal nach unten gerichteten Glieds (12') aufweist, wobei die Kante während Senkbewegungen des Regals verhindert, daß auf dem darunterliegenden Regal gelagerte Güter herausfallen, während das Regal gleichzeitig verstärkt wird.

7. Karren nach Anspruch 5 oder 6, dadurch gekennzeichnet, daß das Regal (12) zwei durch zum Beispiel von Drehbolzen gebildete Gelenkpunkte aufweist, die jeweils fest an dem Regal angebracht sind, und daß entsprechende Befestigungen in der jeweiligen feststehenden Platte in Form von Nuten vorliegen, die Stoßmittel zur Begrenzung von nach unten gerichteten Bewegungen des Gelenkpunkts, aber keine Stoßmittel zur Begrenzung von nach oben gerichteten Bewegungen aufweisen, wodurch das Regal durch Anheben einer Seite davon, um den zugehörigen Gelenkpunkt nach oben aus der Nut heraus zu heben, herausgenommen werden kann, wodurch der Gelenkpunkt auf der gegenüberliegenden Seite ebenfalls aus seiner Nut gehoben werden kann.

8. Karren nach einem der vorhergehenden Ansprüche, dadurch gekennzeichnet, daß mindestens ein neben oder in der Nähe der Oberseite des Karrens angeordnetes, im wesentlichen horizontales Regal (15) an einer benachbarten, feststehenden Platte derart angelenkt ist, daß es in eine vertikal aufrechte Position angehoben werden kann, wobei die Gelenkpunkte des Regals in Nuten (22a, 22b) entlang den Seiten (15a', 15b') des Regals laufen, wodurch das Regal relativ zu seinen Gelenkpunkten geschoben und nach unten längsseits der feststehenden Platte in eine vertikal aufrechte Position, und an der Platte anstoßend, bewegt werden kann.

9. Karren nach Anspruch 8, dadurch gekennzeichnet, daß ein an der Oberseite des Karrens angeordnetes Regal (15) eine vertikal nach unten verlängerte Vorderkante (16) mit einem angrenzenden Seitenteil (17a, 17b) auf jeder Seite aufweist, die so ausgeführt sind, daß die obere Ecke des Karrens an der offenen Seite in der unteren horizontalen Position des Regals von dem Regal derart umschlossen ist, daß das Regal in dieser Position nicht zur hinteren Platte (2) hin bewegt werden kann, während die oberen Ecken gleichzeitig zusammengehalten und stabilisiert werden.

10. Karren nach den Ansprüchen 5 - 9, dadurch gekennzeichnet, daß alle Regale so angeordnet sind, daß sie an die gleiche feststehende Platte, vorzugsweise die hintere Platte (2), angehoben werden können.

11. Karren nach einem der vorhergehenden Ansprüche, dadurch gekennzeichnet, daß mindestens eine der Laufrollen (8a) gegen Drehbewegung verriegelt werden kann.

12. Karren nach Anspruch 11, dadurch gekennzeichnet, daß das Laufrollenverriegelungssteuermittel (26) derart ausgeführt ist, daß es sich in seiner verriegelten Position befinden muß, damit die klappbare Bodenplatte (10) in ihre horizontale, lastaufnehmende Position gesenkt werden kann, und daß das Steuermittel vorzugsweise so angeordnet ist, daß es durch die klappbare Bodenplatte in die Verriegelungsposition geschoben worden kann, wenn die klappbare Bodenplatte in ihre horizontale Position bewegt wird.

## Revendications

1. Chariot pour le transport de marchandises et possédant des roues, des roulettes, des galets de roulement et des moyens similaires pour le transport aisé par exemple d'un producteur à un consommateur au moyen d'une camionnette ou d'un camion, ledit chariot étant du type dans lequel les paires opposées des panneaux du chariot sont disposées en une relation essentiellement parallèle et l'avant (1) est couvert ou est constitué d'un panneau ouvrant, tandis que las panneaux restants du chariot sont fixes, le panneau de fond du chariot étant essentiellement horizontal et englobant une section de panneain de fond repliable (10) qui peut être relevée jusqu'à une position debout pour venir buter contre un des panneaux fixes, par lequel deux chariots identiques, après avoir relevé les sections de panneaux de fond repliables (10) des deux chariots jusqu'à une position debout, peuvent être placés dans une position d'emboîtement, caractérisé en ce que le panneau de fond du chariot comprend une section de panneau de fond fixe (9) qui s'étend depuis un panneau (3b) des panneaux latéraux fixes jusqu'au panneau latéral fixe opposé (3a), et une ouverture commençant à l'endroit où la section de panneau de fond fixe (9) se termine et s'étendant jusqu'au panneau latéral fixe opposé (3a), et en ce que la section de panneau de fond repliable (10) recouvre au moins ladite ouverture et vient de préférence buter contre le panneau arrière (2), et en ce que la section de panneau de fond fixe (9) de chaque chariot emboîté pénètre dans l'ouverture de l'autre chariot emboîté de telle sorte que le côté ouvert (1) d'un chariot dans la position d'emboîtement la plus resserrée sera situé en position directement adjacente au panneau arrière (2) de l'autre chariot, et les sections de panneaux de fond fixes (9,9) du ou des chariots forment un panneau de fond qui est commun à l'unité d'emboîtement pour le transport d'emballages en retour ou analogues.

2. Chariot selon la revendication 1, caractérisé en ce que la section de panneau de fond fixe (9) est cunéiforme.

3. Chariot selon l'une quelconque des revendications précédentes, caractérisé en ce que la section de panneau de fond repliable (10) est arrangée pour être relevée jusqu'à une position debout contre le panneau arrière (2), en ce qu'il possède des moyens de fixation (24a, 24b) qui, en plus de permettre des mouvements de relèvement de ladite section de panneau de fond, permettent également de déplacer le panneau de fond en direction ou à l'écart du panneau arrière, et en ce que la section de panneau de fond est façonnée à l'aide d'un bord frontal renforcé (23) dont la configuration est telle qu'elle peut venir se mettre en contact de fixation avec des parties du chariot reliées au panneau latéral fixe associé, par lequel, lorsque le bord frontal se trouve dans sa position la plus inférieure et d'extension maximale par traction et lorsque le panneau de fond s'est déplacé en direction du panneau arrière, le bord frontal va venir se mettre en contact de fixation avec lesdites parties de chariot, par lequel on empêche mécaniquement le repliage du panneau de fond vers le haut lorsque le chariot est soulevé par un moyen auxiliaire, tel qu'un chariot élévateur à fourche, qui saisit le chariot à la fois en dessous dudit bord frontal et en dessous du bord d'un des panneaux fixes, de préférence le bord (5) du panneau arrière.

4. Chariot selon la revendication 3, caractérisé en ce que chaque point d'articulation est fixé à demeure à sa section de panneau de fond repliable associée et en ce que sa fixation au panneau latéral fixe associé est conçue de telle sorte que, à partir de position horizontale inférieure de la section de panneau de fond, le point d'articulation associé subit un mouvement d'abord ascendant essentiellement vertical, puis ascendant en s'écartant du panneau arrière.

5. Chariot selon l'une quelconque des revendications précédentes, caractérisé en ce qu'un rayonnage (12) essentiellement horizontal est prévu au-dessus su panneau de fond du chariot, ledit rayonnage étant arrangé pour être relevé dans une position debout contre un des panneaux fixes.

6. Chariot selon la revendication 5, caractérisé en ce que ledit rayonnage (12) possède un bord frontal ayant la forme d'un élément (12) orienté vers le bas en direction verticale, par lequel, au cours des mouvements d'abaissement dudit rayonnage, ledit bord empêche que les marchandises entreposées sur le rayonnage situé en dessous tombent, tout en renforçant en même temps le rayonnage.

7. Chariot selon la revendication 5 ou 6, caractérisé en ce que ledit rayonnage (12) possède deux points d'articulation formés par exemple par des pivots, dont chacun est fixé à demeure au rayonnage, et en ce que des fixations correspondantes dans les panneaux fixes respectifs ont la forme de rainures possédant des moyens de butée pour limiter les mouvements descendants des points d'articulation, mais sont exemptes de moyens de butée pour limiter les mouvements ascendants, par lequel le rayonnage peut être retiré en soulevant un de ses côtés pour soulever le point d'articulation associé et le libérer de la rainure, permettent ainsi au point d'articulation au côté opposé d'être écarté de la même manière de sa rainure par soulèvement.

8. Chariot selon l'une quelconque des revendications précédentes, caractérisé en ce qu'au moins un rayonnage (15) essentiellement horizontal, disposé en position adjacente à la face supérieure du chariot ou proche de cette dernière, est relié en pivotement à un panneau fixe adjacent pour pouvoir être relevé dans une position dressée verticale, les points d'articulation dudit rayonnage se déplaçant dans des rainures (22a, 22b) s'étendant sur les côtés (15a', 15d') dudit rayonnage, permettant ainsi de pousser le rayonnage par rapport à ses points d'articulation et de le déplacer vers le bas le long dudit panneau fixe pour prendre uns position dressée verticale qui vient buter contre ledit panneau.

9. Chariot selon la revendication 8, caractérisé en ce qu'un rayonnage (15) positionné sur la face supérieure du chariot possède un bord frontal (16) prolongé vers le bas en direction verticale, englobant une portion latérale adjacente (17a, 17b) de part et d'autre, conçu de telle sorte que, dans la position horizontale inférieure du rayonnage, le coin supérieur du chariot, du côté ouvert, sera enfermé par ledit rayonnage de telle sorte que, dans cette position, le rayonnage ne peut être déplacé en direction du panneau arrière (2), tandis qu'en même temps, lesdits coins supérieurs sont maintenus ensemble et sont stabilisés.

10. Chariot selon les revendications 5 à 9, caractérisé en ce que tous les rayonnages sont arrangés pour être relevés contre le même panneau fixe, de préférence le panneau arrière (2).

11. Chariots salon l'une quelconque des revendications précédentes, caractérisé en ce qu'au moins une des roulettes (8a) peut être bloquée à l'encontre d'un mouvement de rotation.

12. Chariot selon la revendication 11, caractérisé en ce que le moyen de commande (26) du blocage des roulettes est conçu de telle sorte qu'il est forcé à prendre sa position bloquée dans le but de pouvoir abaisser le panneau de fond repliable (10) dans sa position horizontale prête à recevoir la charge et de préférence ledit moyen de commande est arrangé pour être décalé dans la position de blocage par le panneau de fond repliable lorsqu'on déplace ce dernier dans sa position horizontale.
